Europäisches Patentamt

European Patent Office

Office européen des brevets

(11) Numéro de publication : **0 028 955**
**B1**

(12) # FASCICULE DE BREVET EUROPÉEN

(45) Date de publication du fascicule du brevet :
13.06.84

(51) Int. Cl.³ : **F 16 D 55/224**

(21) Numéro de dépôt : **80401503.0**

(22) Date de dépôt : **22.10.80**

(54) **Frein à disque à étrier coulissant.**

(30) Priorité : 08.11.79 FR 7927568

(43) Date de publication de la demande :
20.05.81 Bulletin 81/20

(45) Mention de la délivrance du brevet :
13.06.84 Bulletin 84/24

(84) Etats contractants désignés :
DE GB IT SE

(56) Documents cités :
FR-A- 1 500 830
FR-A- 2 073 920
FR-A- 2 142 248
FR-A- 2 221 028

(73) Titulaire : SOCIETE ANONYME D.B.A.
Centre Paris Pleyel
F-93521 St-Denis Cedex 01 (FR)

(72) Inventeur : Delaunay, Jean
18, rue Pegond
F-93700 Drancy (FR)
Inventeur : Le Marchand, Claude
8, allée des Tilleuls
F-95330 Domont (FR)

(74) Mandataire : Poidatz, Emmanuel et al
Service Brevets Bendix 44 rue François 1er
F-75008 Paris (FR)

Jouve, 18, rue St-Denis, 75001 Paris, France

## Description

L'invention a pour objet un frein à disque à étrier coulissant, notamment pour véhicule automobile.

L'invention concerne en particulier un frein à disque du type à étrier mobile dont l'étrier est monté coulissant, au moyen de deux colonnettes axiales, sur un support fixe dans lequel sont reçus en ancrage et en coulissement deux éléments de friction susceptibles de venir en engagement de friction avec les faces opposées d'un disque tournant lors de la mise en œuvre de moyens d'actionnement constitués d'un moteur de frein agissant directement sur l'un des éléments de friction et agissant sur l'autre élément de friction par réaction au travers de l'étrier mobile.

On connaît du brevet français FR-A-2 142 248 un frein à disque du type défini ci-dessus dans lequel les colonnettes traversent des alésages prévus en vis-à-vis dans le support fixe et dans l'étrier. Les alésages prévus dans l'étrier présentent, en section transversale, sensiblement la forme d'un C afin que les colonnettes puissent être introduites dans les alésages de l'étrier en étant présentées transversalement par rapport à leur axe ; des manchons de verrouillage et de coulissement sont en outre montés sur chacune des colonnettes pour coopérer avec les alésages en forme de C prévus dans l'étrier. Ces manchons peuvent présenter des méplats qui en coopérant avec des pièces élastiques de blocage pour éviter une rotation intempestive du manchon par rapport aux alésages en forme de C évitent une désolidarisation accidentelle de l'étrier par rapport aux colonnettes.

Dans ce type de frein, il existe nécessairement des jeux fonctionnels entre l'étrier, les colonnettes et leurs manchons respectifs de telle sorte que par suite des vibrations inhérentes à l'installation de tels freins sur un véhicule automobile ces jeux fonctionnels engendrent des vibrations provoquant des bruits parasites qu'il est d'usage d'atténuer ou de prévenir au moyen d'un ou plusieurs ressorts anti-bruit. Les différents jeux fonctionnels peuvent également provoquer, lors de l'actionnement du frein un phénomène de pivotement de l'étrier dans un plan perpendiculaire au plan du disque qui est néfaste au bon fonctionnement du frein et qu'il est d'usage d'atténuer ou de supprimer au moyen de ressorts.

L'emploi de tels ressorts augmente le nombre des composants du frein et nécessite des opérations d'usinage supplémentaires de l'étrier et des manchons.

Lors de l'assemblage du frein, l'installation de tels ressorts est rendue difficile par la précontrainte emmagasinée dans ces ressorts et que l'on doit vaincre lors du montage. Cette précontrainte est généralement élevée lorsque l'on désire obtenir une bonne efficacité du ou des ressorts dans leur fonction anti-bruit et anti-pivotement de l'étrier. De plus, les risques d'échappement accidentel d'un ressort ne correspondent pas toujours aux exigences de fiabilité requises dans les systèmes de freinage des véhicules automobiles.

Il a été proposé dans le brevet français FR-A-2 073 920 d'interposer des manchons et des fourrures élastiques pour absorber les chocs lors des applications de freinage. Ce type de construction présente néanmoins l'inconvénient que pour se déplacer l'étrier doit coulisser sur du caoutchouc. Le risque bien connu du collage entre caoutchouc et métal est susceptible de provoquer un mauvais coulissement de l'étrier et de provoquer un rappel élastique de celui-ci par déformation du caoutchouc provoquant une course morte du frein.

L'invention a pour objet un frein à disque du type décrit plus haut dans lequel de tels inconvénients sont évités.

Dans ce but, l'invention propose un frein à disque à étrier monté coulissant, au moyen de deux colonnettes axiales, sur un support fixe dans lequel sont reçus en ancrage et en coulissement deux éléments de friction susceptibles de venir en engagement de friction avec les faces opposées d'un disque tournant lors de la mise en œuvre de moyens d'actionnement constitués par un moteur de frein agissant directement sur l'un des éléments de friction et agissant sur l'autre élément de friction par réaction au travers de l'étrier coulissant, lesdites colonnettes traversant des alésages prévus en vis-à-vis dans le support fixe et dans l'étrier, les alésages prévus dans l'étrier étant munis d'échancrures et présentant, en section transversale, sensiblement la forme d'un C de façon que lesdites colonnettes puissent être introduites dans les alésages ouverts en étant présentées transversalement par rapport à leur axe et sans démontage des dites colonnettes, ledit disque définissant lorsqu'il tourne dans le sens correspondant à la marche avant du véhicule une colonnette avant et une colonnette arrière, l'échancrure de l'alésage dans lequel est engagée la colonnette arrière étant dirigée dans la direction du plan contenant les deux axes des deux colonnettes et en éloignement de la colonnette avant, un manchon de coulissement et de verrouillage étant monté sur ladite colonnette arrière pour coopérer avec l'alésage aouvert correspondant formé dans l'étrier, caractérisé en ce que ledit manchon estmuni à sa périphérie d'une saillie radiale réalisée dans un matériau élastique et s'étendant depuis ladite périphérie pour coopérer avec la portion centrale de la partie cylindrique dudit alésage en forme de C dans lequel est engagée ladite colonnette arrière, ladite saillie radiale étant montée comprimée entre ladite périphérie et ladite partie de l'alésage afin de rattraper les jeux et les tolérances de fabrication et d'éviter tout pivotement parasite de l'étrier dans ledit plan ainsi que les bruits dus aux vibrations de l'ensemble du frein lors de son utilisation.

On décrira maintenant à titre d'exemple non limitatif un mode de réalisation particulier de l'invention en se référant aux dessins annexés dans lesquels :

La Figure 1 est en vue en bout d'un frein à disque réalisé conformément à l'invention, dont une moitié est représentée en coupe transversale.

La Figure 2 est une vue de dessus du frein à disque de la Figure 1 dont certaines parties sont représentées en coupe.

La Figure 3 est une vue en section, selon la ligne 3-3 de la Figure 2, du manchon équipant le frein de la Figure 2, représenté dans la position qu'il occupe après montage sur le frein.

La Figure 4 est une vue en bout d'un frein à disque selon l'invention montrant les phases d'assemblage du frein, et

La Figure 5 est une vue de dessus en coupe du frein représenté à la Figure 4 montrant les phases d'assemblages du frein.

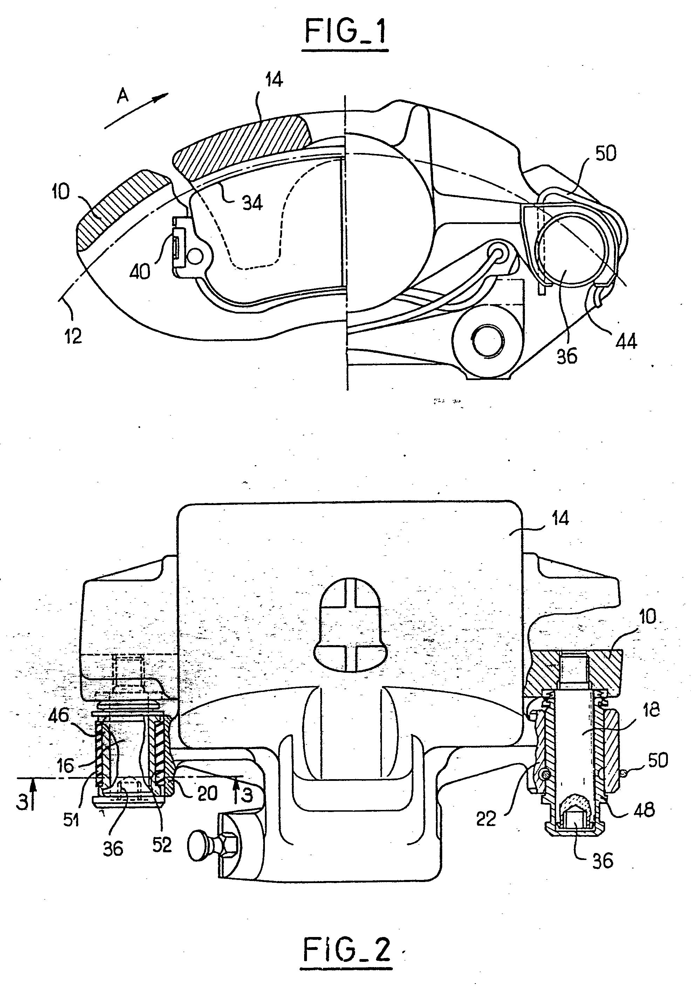

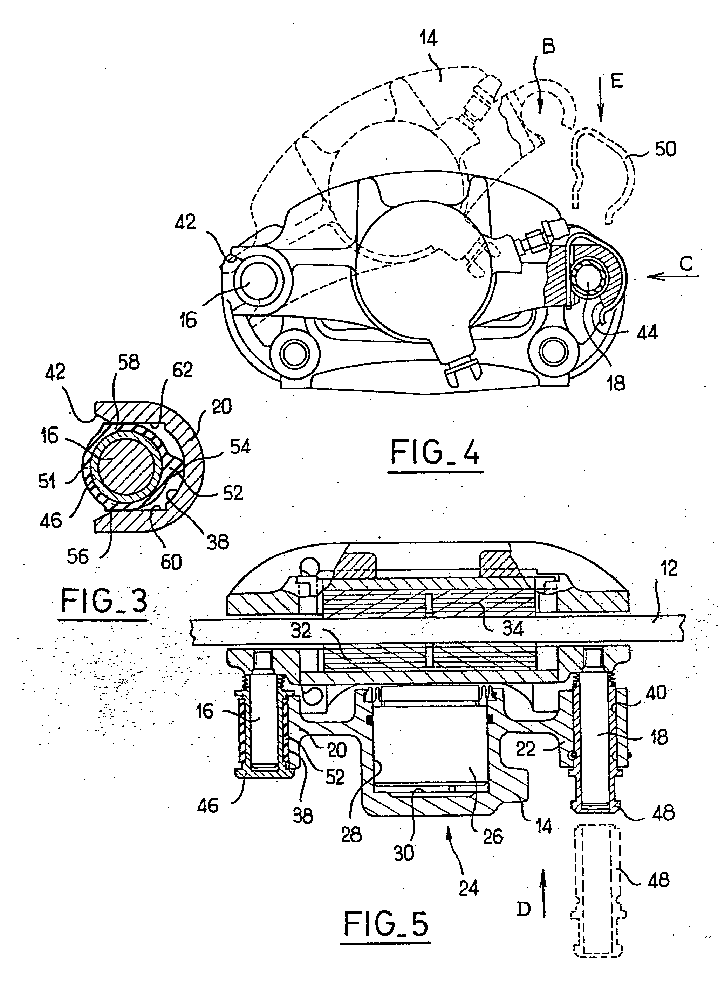

Le frein à disque représenté sur les Figures 1 à 5 comporte un organe support 10 prévu pour être associé à une partie fixe du véhicule (non représentée) et constitué dans le mode de réalisation représenté par une plaque disposée au voisinage d'un disque 12 prévu pour être associé en rotation à une roue de véhicule (non représentée). Le support fixe 10 reçoit en coulissement, au moyen de deux colonnettes axiales circonférentiellement espacées 16 et 18, un étrier mobile 14 chevauchant le disque. Les axes des colonnettes 16 et 18 sont sensiblement parallèles à l'axe de rotation du disque 12 et les colonnettes 16 et 18 sont disposées entre le support fixe 10 et des bras 20 et 22 définis dans l'étrier 14. L'étrier 14 comporte des moyens d'actionnement 24 constitués par un moteur de frein hydraulique (voir Figure 5) comprenant un piston 26 monté coulissant dans un alésage 28 défini dans l'étrier 14 et sensible à la pression régnant dans une chambre de commande 30 susceptible d'être reliée à une source de pression telle que par exemple, le maître cylindre du véhicule. Le piston 26 est disposé de façon à solliciter directement un premier élément de friction 32 contre une première face du disque 12 lorsque le fluide sous pression est admis dans la chambre 30. L'étrier 14 est susceptible de se déplacer par réaction au travers de l'étrier 14 entraînant le coulissement de ce dernier sur les colonnettes 16 et 18 afin de solliciter un second élément de friction 34 contre l'autre face du disque 12. Comme le montre en particulier la Figure 1, l'élément de friction 34 est supporté en coulissement et en ancrage par des bords circonférentiellement espacés 40 d'une ouverture ménagée dans le support fixe 10. D'une manière identique l'élément de friction 32 est également reçu en ancrage et en coulissement sur le support fixe 10.

Dans le mode de réalisation représenté, et comme le montre plus particulièrement la Figure 12, les deux colonnettes 16 et 18 sont associées au support fixe 10 par une liaison filetée. Plus précisément les colonnettes 16 et 18 qui permettent le mouvement de coulissement de l'étrier 14 sont montées vissées sur ledit support fixe. Dans l'exemple représenté, chacune des colonnettes est munie d'une tête dans laquelle est formée une tête de vis à six pan creux 36 permettant de visser les colonnettes à l'aide d'une clef correspondante (non représentée).

Lorsque le disque 12 tourne dans le sens correspondant à la marche avant du véhicule désigné par une flèche A sur la figure 1, il permet de définir la colonnette 18 comme colonnette avant du frein et la colonnette 16 comme colonnette arrière du frein.

Les bras 20 et 22 de l'étrier 14 sont munis d'alésages 38 et 40 dans lesquels sont enfilées les colonnettes 16 et 18 respectivement. Les alésages 38 et 40 sont munis chacun d'une échancrure, 42 et 44 respectivement, de telle façon que les deux alésages 38 et 40 présentent en section transversale la forme d'un C. En considérant la Figure 4, l'échancrure 42 est dirigée sensiblement parallèlement au plan passant par les axes des colonnettes 16 et 18 et s'ouvre vers l'extérieur du frein. L'échancrure 44 est dirigée sensiblement perpendiculairement au plan défini ci-dessus et s'ouvre verticalement vers le bas.

En se reportant aux Figures 2 et 5, on voit que les colonnettes 16 et 18 sont pourvues chacune d'un manchon cylindrique respectivement 46 et 48, fermé à une extrémité et enfilé sur la colonnette correspondante. Le manchon 48 coopère avec la colonnette 18 et est rendu solidaire du bras 22 de l'étrier 14 au moyen d'un ressort 50 logé dans des rainures correspondantes formées dans le bras 22 et dans le manchon 48. L'étrier 14 coulisse au moyen des manchons 46 et 48 sur les colonnettes 16 et 18 fixées au support fixe 10.

Conformément à l'invention, le manchon 46, monté sur la colonnette arrière 16, est muni à sa périphérie d'une saillie radiale 52 réalisée dans un matériau élastique et qui s'étend axialement le long d'une génératrice extérieure du manchon 46. Le bord externe 54 de la saillie 52 coopère avec la portion cylindrique de l'alésage 38 disposée en vis-à-vis. Dans le mode de réalisation représenté, la saillie 52 est une partie intégrante d'un manchon anti-bruit 51, réalisé dans un matériau élastique et enfilé sur le manchon 46. Afin d'effectuer les rattrapages de jeux, d'assurer ses fonctions de ressort anti-bruit et de recentrage du frein, la saillie 52 est montée légèrement comprimée entre le manchon 46 et l'alésage 38. Tout pivotement de l'étrier dans le plan passant par les axes des colonnettes est ainsi rendu impossible ou, est immédiatement annulé sous l'effet de la réaction élastique provoquée par une compression supplémentaire de la saillie élastique 52.

On comprend que pour assurer le bon fonctionnement de la saillie, cette dernière doit s'étendre, vers la portion cylindrique de l'alésage 38, sensiblement dans le plan passant par les axes des colonnettes 16 et 18 mentionné plus haut.

Afin de maintenir la saillie 52 dans ce plan, le manchon élastique 51 est muni de deux bourrelets périphériques 56 et 58 s'étendant axialement et qui coopèrent avec des plats 60 et 62 formés dans l'alésage 38. On comprend qu'ainsi toute rotation du manchon anti-bruit 51 par rapport à l'alésage 38 est empêchée.

L'opération de montage de l'étrier 14 sur le support fixe 10 s'effectue de la façon suivante :

Les deux colonnettes 16 et 18 étant déjà vissées sur le support fixe 10, on vient enfiler le manchon 46, préalablement muni de son manchon anti-bruit 51 sur la colonnette 16. On présente ensuite l'étrier 14 pour engager l'échancrure 42 sur les manchons 46 et 51 en prenant soin de réaliser un positionnement correct du manchon 51 et de sa saillie 52 dans l'alésage ouvert 38. On bascule l'étrier 14, suivant la flèche B, sur le support 10 en le faisant pivoter autour de la colonnette 16, ce qui a pour effet d'engager cette dernière dans l'échancrure verticale 44. On applique alors un effort à l'étrier 14 suivant la flèche C (contenue dans le plan passant par les axes des deux colonnettes) afin de comprimer légèrement la saillie 52 entre le manchon 46 et l'alésage 38. Cette légère compression permettant de positionner la colonnette 18 et l'alésage 40 sensiblement coaxiaux, cette position étant maintenue on vient enfiler axialement le manchon de coulissement et de verrouillage 48 (suivant la flèche D de la Figure 5). Lorsqu'on relâche l'effort appliqué à l'étrier 14 suivant la flèche C, la saillie élastique 52 préalablement comprimée se détend légèrement afin d'assurer le rattrapage des jeux fonctionnels. Il ne reste plus ensuite qu'à introduire le ressort 50 de verrouillage du manchon 48 suivant la flèche E. Il est à noter que l'emploi d'un élément de verrouillage du manchon 46 est rendu inutile grâce à la coopération par friction existant entre la saillie 52 et l'alésage 38 qui s'oppose à tout déplacement axial du manchon 46 par rapport à l'étrier 14.

Le démontage du frein s'effectue dans l'ordre inverse des opérations qui viennent d'être décrites.

Il apparaît donc, à la lecture de ce qui précède, que la saillie 52 agit comme un élément absorbant les vibrations pouvant exister entre l'étrier et le support fixe tout en assurant une fonction de rattrapage des jeux et des tolérances de fabrication et de recentrage de l'étrier.

## Revendications

1. Frein à disque à étrier (14) monté coulissant, au moyen de deux colonnettes axiales (16, 18), sur un support fixe (10) dans lequel sont reçus en ancrage et en coulissement deux éléments de friction (32, 34) susceptibles de venir en engagement de friction avec les faces opposées d'un disque tournant (12) lors de la mise en œuvre de moyens d'actionnement constitués par un moteur de frein (24) agissant directement sur l'un des éléments de friction (32) et agissant sur l'autre élément de friction (34) par réaction au travers de l'étrier coulissant, lesdites colonnettes (16, 18) traversant des alésages prévus en vis-à-vis dans le support fixe et dans l'étrier, lesdits alésages (38, 40) prévus dans l'étrier étant munis d'échancrures (42, 44) et présentant, en section transversale, sensiblement la forme d'un C de façon que lesdites colonnettes (16, 18) puissent être introduites dans les alésages ouverts (38, 40) en étant présentées transversalement par rapport à leur axe, et sans démontage desdites colonnettes, ledit disque définissant lorsqu'il tourne dans le sens correspondant à la marche avant du véhicule une colonnette avant (18) et une colonnette arrière (16), l'échancrure (42) de l'alésage (38) dans lequel est engagée la colonnette arrière (16) étant dirigée dans la direction du plan contenant les deux axes de deux colonnettes (16, 18) et en éloignement de la colonnette avant (18), un manchon (46) de coulissement et de verrouillage étant monté sur ladite colonnette arrière (16) pour coopérer avec l'alésage ouvert correspondant (38) formé dans l'étrier (14), caractérisé en ce que ledit manchon (46) est muni à sa périphérie d'une saillie radiale (52) réalisée dans un matériau élastique et s'étendant depuis ladite périphérie pour coopérer avec la portion centrale de la partie cylindrique dudit alésage (38) en forme de C dans lequel est engagée ladite colonnette arrière (16), ladite saillie radiale (52) étant montée comprimée entre ladite périphérie et ladite partie de l'alésage afin de rattraper les jeux et les tolérances de fabrication et d'éviter tout pivotement parasite de l'étrier dans ledit plan ainsi que les bruits dus aux vibrations de l'ensemble du frein lors de son utilisation.

2. Frein à disque selon la revendication 1, caractérisé en ce que ladite saillie radiale (52) s'étend axialement tout au long de la surface de coulissement prévue entre ledit manchon (46) et ledit alésage correspondant (38).

3. Frein à disque selon la revendication 1 ou 2, caractérisé en ce qu'un manchon élastique (51) est monté sur ledit manchon de coulissement (46) et en ce que ladite saillie radiale est venue (52) de matière avec ledit manchon élastique (51).

4. Frein à disque selon la revendication 3, caractérisé en ce que ledit manchon élastique (51) est muni d'au moins un bourrelet (56) venu de matière avec ce dernier, et s'étendant axialement à sa périphérie pour coopérer avec une surface correspondante (60) prévue en vis-à-vis sur la paroi interne dudit alésage (38) dans lequel est engagée la colonnette arrière (16), ledit bourrelet (56) permettant d'éviter toute rotation relative dudit manchon élastique (51) par rapport audit alésage afin de maintenir ladite saillie dans sa position fonctionnelle par rapport audit alésage.

## Claims

1. A disc brake comprising a caliper (14) slidingly mounted by means of a pair of axial columns (16, 18) upon a fixed support (10) in which a pair of friction elements (32, 34) are slidingly received and anchored, which friction elements are adapted to frictionally engage the opposite faces of a rotating disc (12) upon operation of an actuating means comprised by a brake motor (24) acting directly upon one of said friction elements (32) and acting upon the other friction element (34) by reaction via the sliding caliper, said columns (16, 18) traversing bores provided in the fixed support and in the caliper opposite to each other, said bores (30, 40) provided in the caliper being provided with cutouts (42, 44) and having, in a transverse section, substantially the form of a C such that said columns (16, 18) may be inserted into the open bores (38, 40) while being orientated transverse with respect to their axis, and without dismounting of said columns, said disc defining, when rotating in a direction corresponding to a forward movement of the vehicle, a forward column (18) and a rearward column (16), the cutout (42) of the bore (38) in which the rearward column (16) is engaged being directed in the direction of the plane containing the two axes of the two columns (16, 18) and away from the forward column (18), a sliding and locking sleeve (46) being mounted upon the rearward column (16) for cooperating with the corresponding open bore (38) formed in the caliper (14), characterized in that said sleeve (46) is provided at its periphery with a radial projection (52) made of resilient material and extending from said periphery for cooperating with the central portion of the cylindrical part of said bore (38) in which said rearward column (16) is engaged, said radial projection (52) being mounted by being compressed between said periphery and said part of the bore in order to absorb any play and manufacturing tolerances and to avoid any undesired pivoting of the caliper in said plane as well as any noises due to vibrations of the brake assembly while in operation.

2. The disc brake according to claim 1, characterized in that said radial protection (52) extends axially all along the sliding surface provided between said sleeve (46) and the corresponding bore (38).

3. The disc brake according to claim 1 or claim 2, characterized in that a resilient sleeve (51) is mounted upon said sliding sleeve (46) and in that said radial projection is made of the material of said resilient sleeve (51).

4. The disc brake according to claim 3, characterized in that said resilient sleeve (51) is provided with a least one bead (56) made of the material of the latter and extending axially at its periphery for cooperating with a corresponding surface (60) provided opposite thereto upon the internal wall of said bore (38) in which the rearward column (16) is engaged, said bead (56) allowing to avoid any relative movement of said resilient sleeve (51) with respect to said bore in order to maintain said projection in its functional position with respect to said bore.

**Ansprüche**

1. Schwimmsattel-Scheibenbremse, deren Schwimmsattel (14) mittels zweier axialer Bolzen (16, 18) auf einem festen Bremsträger (10) gleitend gelagert ist, in dem zwei Reibelemente (32, 34) gleitend gehalten sind, die mit den gegenüberliegenden Seiten einer umlaufenden Bremsscheibe (12) dadurch in Reibanlage bringbar sind, daß von einem Bremsmotor (24) gebildete Betätigungsmittel unmittelbar auf eines der Reibelemente (32) und indirekt über den gleitenden Schwimmsattel auf das andere Reibelement (34) einwirken, wobei sich die Bolzen (16, 18) durch Bohrungen erstrecken, die gegenüberliegend im Bremsträger und im Schwimmsattel gebildet sind, wobei die im Schwimmsattel vorgesehenen Bohrungen (38, 40) mit Aussparungen (42, 44) versehen sind und im Querschnitt im wesentlichen die Form eines C haben, derart, daß die Bolzen (16, 18) quer zu ihrer Achse in die offenen Bohrungen (38, 40) ohne Ausbau der Bolzen einsetzbar sind, wobei die Bremsscheibe bei ihrer Drehung im Sinne einer Vorwärtsbewegung des Fahrzeuges einen vorderen Bolzen (18) und einen hinteren Bolzen (16) definiert, wobei die Aussparung (42) der Bohrung (38), in der der hintere Bolzen (16) sitzt, in Richtung der Ebene, die die beiden Achsen der Bolzen (16, 18) enthält, sowie von dem vorderen Bolzen (18) weg gerichtet ist, wobei eine Gleit- und Verriegelungsbuchse (46) auf dem hinteren Bolzen (16) gelagert ist, um mit der im Schwimmsattel (14) gebildeten entsprechenden offenen Bohrung (38) zusammenzuwirken, dadurch gekennzeichnet, daß die Buchse (46) an ihrem Umfang mit einem radialen Vorsprung (52) versehen ist, der aus einem elastischen Material besteht und sich vom Umfang weg erstreckt, um mit dem zentralen Abschnitt des zylindrischen Teils der C-förmigen Bohrung (38) zusammenzuwirken, in der der hintere Bolzen (16) sitzt, wobei der radiale Vorsprung (52) unter Komprimierung zwischen dem besagten Umfang und dem besagten Abschnitt der Bohrung angebracht ist, um das Spiel und die Herstellungstoleranzen aufzuzehren und eine unerwünschte Schwenkbewegung des Schwimmsattels in der besagten Ebene sowie Geräusche aufgrund von Schwingungen der Bremsanordnung zu vermeiden.

2. Scheibenbremse nach Anspruch 1, dadurch gekennzeichnet, daß sich der radiale Vorsprung (52) axial über die gesamte Gleitfläche erstreckt, die zwischen der Buchse (46) und der entsprechenden Buchse (38) vorgesehen ist.

3. Scheibenbremse nach Anspruch 1 oder 2, dadurch gekennzeichnet, daß eine elastische Hülse (51) auf der Gleit- und Verriegelungsbuchse (46) angebracht ist und daß der radiale Vorsprung aus dem Material der elastischen Hülse (51) hergestellt ist.

4. Scheibenbremse nach Anspruch 3, dadurch gekennzeichnet, daß die elastische Hülse (51) mit mindestens einem Wulst (56) versehen ist, der einstückig mit dieser ausgebildet ist und sich an seinem Umfang axial erstreckt, um mit einer entsprechenden Fläche (60) zusammenzuwirken, die gegenüberliegend an der Innenwand der Bohrung (38) vorgesehen ist, in der der hintere Bolzen (16) sitzt, wobei der Wulst (56) jegliche Relativdrehung der elastischen Hülse (51) bezüglich der Bohrung unterbindet, um den Vorsprung in seiner Betriebslage bezüglich der Bohrung zu halten.

## FIG_1

A

14

10

34

40

50

12

36

44

## FIG_2

14

46

10

16

18

50

3

20

3

48

51

22

36

52

36

FIG_4

FIG_3

FIG_5

2